# EUROPÄISCHE PATENTSCHRIFT

(11) **EP 3 293 096 B1**
(45) Veröffentlichungstag und Bekanntmachung des Hinweises auf die Patenterteilung: **29.07.2020**
(21) Anmeldenummer: 16188594.2
(22) Anmeldetag: 13.09.2016
(51) Int. Cl.: B62D 33/04

(54) **TRAGGERÜST FÜR EINEN PLANENAUFBAU EINES NUTZFAHRZEUGS UND RUNGE FÜR EIN SOLCHES TRAGGERÜST**
SUPPORTING STRUCTURE FOR A CANVAS COVER OF A COMMERCIAL VEHICLE AND STANCHION FOR SUCH A SUPPORTING STRUCTURE
BATI PORTEUR POUR UNE SUPERSTRUCTURE DE VEHICULE UTILITAIRE ET MONTANT POUR UN TEL BATI PORTEUR

(43) Veröffentlichungstag der Anmeldung: 14.03.2018
(73) Patentinhaber: Schmitz Cargobull AG, 48341 Altenberge (DE)
(72) Erfinder: Schouwink, Christian, 48161 Münster (DE); Hornig, Stefan, 48565 Steinfurt (DE)
(74) Vertreter: Cohausz & Florack

(56) Entgegenhaltungen:
- EP-B1- 1 785 338
- DE-T2- 69 707 892
- DE-U1- 9 212 508
- DE-U1-202015 100 194
- DE-U1-202016 000 463

## Beschreibung

Die Erfindung betrifft ein Traggerüst für einen Planenaufbau eines Nutzfahrzeugs, wobei das Traggerüst ein Führungsprofil und eine Runge umfasst, die einen Rungenkopf mit mindestens einer daran gelagerten Rolle besitzt, deren Drehachse quer zur Längsachse der Runge ausgerichtet ist und die an dem Führungsprofil rollbar geführt ist, um ein Verschieben der Runge längs des Führungsprofils aus einer Gebrauchsstellung, in der die Runge arretierbar und aus der die Runge lösbar ist, in eine Beladestellung zu ermöglichen, in der eine seitliche Öffnung des Planenaufbaus zum Beladen des Nutzfahrzeugs freigegeben ist.

Bei Nutzfahrzeugen der hier in Rede stehenden Art handelt es sich typischerweise um konventionelle Lastkraftwagen, Anhänger für solche Lastkraftwagen oder um von einer Zugmaschine gezogene Satteltauflieger, in der Fachsprache auch "Trailer" genannt.

Die auf solchen Nutzfahrzeugen vorgesehenen Aufbauten umgrenzen einen Laderaum und schützen das darin transportierte Gut gegen äußere Einflüsse. Dabei sind Planenaufbauten in der Regel so konzipiert, dass sie das Transportgut gegen Staub, Feuchtigkeit und desgleichen abschirmen. Zu diesem Zweck weisen in der Praxis eingesetzte Planenaufbauten typischerweise eine feste, in normaler Fahrtrichtung gesehen vorne angeordnete Stirnwand und eine Rückwand auf, die ebenfalls aus festen Elementen besteht und in der Regel eine doppelflügelige Türe umfasst, über die eine Beladung des Laderaums von der Rückseite her erfolgen kann.

Die Längsseiten und das Dach bestehen bei Nutzfahrzeug-Planenaufbauten dagegen üblicherweise aus ein oder mehreren Planen, von denen mindestens die Längsseitenplanen in Richtung der Stirn- oder Rückseite längs des Fahrzeugs verschoben werden können, um auch eine Beladung des Laderaums von der jeweiligen Längsseite her zu ermöglichen. Genauso ist es bekannt, das Dach verschiebbar auszubilden, um auch dieses öffnen zu können und eine Beladung von oben her zu ermöglichen.

Das Traggerüst erfüllt bei einem Nutzfahrzeug-Planenaufbau mehrere Funktionen. Zum einen sorgt es für die erforderliche Formsteifigkeit des Aufbaus. Zum anderen dient es zur Führung der jeweils schiebebeweglich an ihm gelagerten Seitenwand- oder Dachplanen. Hierzu weist das Traggerüst üblicherweise vier in den Eckbereichen des Aufbaus angeordnete Pfosten, die so genannten "Eckrungen", auf. Die einer Längsseite jeweils zugeordneten Eckrungen tragen dabei jeweils einen Längsträger.

Die Längsträger überspannen typischerweise die gesamte Länge des Nutzfahrzeugs. Dabei sind die Längsträger gewichtsminimiert mit einer entsprechend reduzierten Gesamtsteifigkeit ausgelegt. Um dennoch zu große Durchbiegungen der Längsträger zu vermeiden und die erforderliche Steifigkeit des Planenaufbaus zu gewährleisten, sind üblicherweise so genannte "Rungen" vorgesehen. Diese Rungen sind bei für den Fahrbetrieb vorbereiteten Nutzfahrzeugen typischerweise in gleichmäßigen Abständen über die Länge des Längsträgers verteilt und stützen so den jeweiligen Längsträger gegen das Chassis des Nutzfahrzeugs ab. Um dennoch eine ungehinderte Beladung des Laderaums zu ermöglichen, sind die Rungen üblicherweise mit einem lösbaren Arretiermechanismus ausgestattet. Bei aktivierter Arretierung sind die Rungen in ihrer jeweiligen Stützstellung fixiert, wogegen sie bei deaktivierter Arretierung lose an dem Längsträger hängend entlang des Längsträgers verschoben werden können.

Zu diesem Zweck sind die Längsträger von Planenaufbauten der hier in Rede stehenden Art üblicherweise als Führungsprofile ausgebildet, in denen sich eine Führungsbahn längs des Profils erstreckt. Auf der Führungsbahn rollt die mindestens eine am Kopf der jeweiligen Runge gelagerte Rolle ab. Typischerweise sind dabei an jeder Runge mindestens zwei in Längsrichtung des Längsträgers beabstandet angeordnete Rollen vorgesehen. Eine optimale Führung der Runge in oder an dem Längsträger ergibt sich dabei dann, wenn der Längsträger zwei parallel verlaufende Führungsbahnen aufweist, auf denen jeweils eine Rolle eines Rollenpaares abrollt.

Auf diese Weise ist die jeweilige Runge sowohl in Richtung des vom Planenaufbau umgrenzten Laderaums als auch in der entgegengesetzten, in die freie Umgebung des Aufbaus gerichteten Richtung an dem Längsträger abgestützt. Dies sichert nicht nur einen optimalen Stand in der Gebrauchsstellung, sondern ermöglicht auch ein vergleichbar verschleißfreies Abrollen der Rollen auf den Führungsbahnen während des Verschiebens der Runge.

Ein Beispiel für an Doppelrollen geführte Rungen ist in der EP 1 785 338 B1 beschrieben. Die dort gezeigte Runge trägt zusätzlich ein Stegblech, das als Anschlag dient, durch den ein Verkanten der Doppelführungsrollen der Runge verhindert werden soll.

Ein anderes Beispiel für eine Rungenführung in einem Planenaufbau geht aus der DE 20 2016 000 463 U1 hervor. Auch dort sind Rungen über Rollenpaare in einem Längsträger-Führungsprofil gelagert. Dabei soll eine optimale Ausrichtung der Doppelführungsrollen in dem Führungsschlitz des Führungsprofils bei in Stützstellung befindlicher Runge dadurch erzielt werden, dass an einem kopfseitigen Querstück der Runge ein Rutschsicherungselement vorgesehen ist, das bei in Stützstellung verspannter Runge gegen die zugeordnete Unterseite des Führungsprofils drückt. Ein weiteres Beispiel für ein Traggerüst für einen Planenaufbau eines Nutzfahrzeuges mit dem Merkmalen des Oberbegriffs von Anspruch 1 zeigt die DE 697 07 892 T2.

Vor dem Hintergrund des voranstehend erläuterten Standes der Technik hat sich die Aufgabe ergeben, ein Traggerüst für einen Nutzfahrzeug-Planenaufbau zu schaffen, bei dem bei in Gebrauchsstellung arretierter Runge mit einfachen Mittel eine optimale Positionierung bei minimiertem Verschleißpotenzial sichergestellt ist.

Die Erfindung hat diese Aufgabe durch das in Anspruch 1 angegebene Traggerüst gelöst.

Vorteilhafte Ausgestaltungen der Erfindung sind in den abhängigen Ansprüchen angegeben und werden nachfolgend wie der allgemeine Erfindungsgedanke im Einzelnen erläutert.

In Übereinstimmung mit dem eingangs erläuterten Stand der Technik umfasst ein erfindungsgemäßes Traggerüst für einen Planenaufbau eines Nutzfahrzeugs somit ein Führungsprofil und eine Runge, die einen Rungenkopf mit mindestens einer daran gelagerten Rolle besitzt, deren Drehachse quer zur Längsachse der Runge ausgerichtet ist und die an dem Führungsprofil rollbar geführt ist, um ein Verschieben der Runge längs des Führungsprofils aus einer Gebrauchsstellung, in der die Runge arretierbar und aus der die Runge lösbar ist, in eine Beladestellung zu ermöglichen, in der eine seitliche Öffnung des Planenaufbaus zum Beladen des Nutzfahrzeugs freigegeben ist.

Gemäß der Erfindung ist ein solches Traggerüst dadurch gekennzeichnet, dass die Runge im Bereich ihres Rungenkopfes ein Arretierstück trägt, das bei in Gebrauchsstellung arretierter Runge in eine an dem Führungsprofil vorgesehene Öffnung greift und dessen in Achsrichtung der Drehachse der Rolle gemessene Dicke derart an die ebenfalls in Achsrichtung der Drehachse der Rolle gemessene lichte Weite der Öffnung des Führungsprofils angepasst ist, dass das Arretierstück, wenn die Runge in ihrer Gebrauchsstellung arretiert ist, bezogen auf die Achsrichtung der Drehachse der Rolle formschlüssig in der Öffnung des Führungsprofils sitzt.

In entsprechender Weise umfasst eine Runge zur Verwendung an einem Traggerüst für einen Planenaufbau eines Nutzfahrzeugs einen Rungenkopf mit mindestens einer daran gelagerten Rolle, deren Drehachse quer zur Längsachse der Runge ausgerichtet ist und die dazu vorgesehen ist, in einem Führungsprofil des Traggerüsts rollbar gelagert zu sein, um ein Verschieben der Runge längs des Führungsprofils aus einer Gebrauchsstellung, in der die Runge arretierbar ist, in eine Beladestellung zu ermöglichen, in der eine seitliche Öffnung des Planenaufbaus zum Beladen des Nutzfahrzeugs freigegeben ist.

Dabei trägt eine solche Runge ein Arretierstück, welches dazu vorgesehen ist, bei in Gebrauchsstellung arretierter Runge in eine an dem Führungsprofil vorgesehene Öffnung zu greifen, wobei die längs der Drehachse der Rolle gemessene Dicke des Arretierstücks derart an die ebenfalls längs der Drehachse der Rolle gemessene lichte Weite der Öffnung angepasst ist, dass das Arretierstück, wenn die Runge in ihrer Gebrauchsstellung arretiert ist, bezogen auf die Achsrichtung der Drehachse der Rolle formschlüssig in der Öffnung sitzt.

Durch das erfindungsgemäß vorgesehene Arretierstück ist die jeweilige Runge somit in ihrer Gebrauchsstellung in ihrem Kopfbereich gegen eine Verschiebung in eine quer zum Führungsprofil gerichtete Bewegung gesichert. Da diese Lagesicherung nicht über die Rollen, sondern über ein zusätzliches Formelement, das Arretierstück, erfolgt, werden die Rollen bei in Gebrauchsstellung befindlicher Runge auch nicht oder zumindest nicht übermäßig in Achsrichtung ihrer Drehachse belastet. So kommt es auch im Kontaktbereich zwischen dem Führungsprofil und den Rollen allenfalls zu geringfügigen, im zu vernachlässigenden Toleranzbereich liegenden Bewegungen. Der andernfalls im Kontaktbereich auftretende abrasive Verschleiß ist dementsprechend ebenfalls minimiert. Die Gefahr der verschleißbedingten Entstehung von lauten Rattergeräuschen beim Überfahren durch die Rollen der Rungen auslösende Ungleichförmigkeiten der Führungsbahnen ist gleichfalls minimiert.

Insgesamt wird somit durch das erfindungsgemäß vorgesehene Arretierstück auf denkbar einfache und in der Praxis einfach zu verwirklichende Weise ein Traggerüst zur Verfügung gestellt, das einen gegenüber dem Stand der Technik deutlich verbesserten Gebrauchswert besitzt.

Grundsätzlich ist es denkbar, am Längsträger-Führungsprofil eines erfindungsgemäßen Traggerüsts im Bereich der für die Rungen vorgesehenen Punkte separate Öffnungen vorzusehen, in die das erfindungsgemäß an der Runge angebrachte Arretierstück bei in Gebrauchsstellung arretierter Runge in erfindungsgemäßer Weise formschlüssig greift. Als besonders vorteilhaft und leicht zu verwirklichen erweist sich die Erfindung jedoch dann, wenn die betreffende Öffnung durch einen Führungsschlitz des Führungsprofils gebildet ist, in dem die mindestens eine Rolle der Runge geführt ist. Derart mit Führungsschlitzen versehene Führungsprofile sind als Längsträger im Stand der Technik weit verbreitet. Dabei werden die Rollen der jeweiligen Runge in der Regel an einem am Kopf der Runge befestigten Trägerstück gelagert, das durch den Führungsschlitz geführt ist. Bei einer Doppelrollenlagerung ist beidseits des Führungsschlitzes jeweils eine Führungsbahn ausgebildet, auf der eine der Rollen des jeweiligen Rollenpaares abrollen kann. Die lichte Weite des Führungsschlitzes ist dabei in der Regel so bemessen, dass das Trägerstück mit einem gewissen, Kollisionen verhindernden Spiel entlang des Trägers bewegt werden kann, gleichzeitig aber die Runge verliersicher in dem Führungsprofil gehalten ist. Durch die spielbehaftete Führung ist es darüber hinaus möglich, die aus ihrer Arretierstellung gelöste Runge leicht nach außen, d.h. in Richtung der Umgebung des Aufbaus, zu verschwenken, um sie beim Verschieben in die Beladestellung leichter handhaben zu können.

Auch bei einem erfindungsgemäßen Traggerüst erweist es sich daher als günstig, wenn die Rolle an einem Tragstück gelagert ist, welches in Längsrichtung der Runge über einen bestimmten Verschiebeweg verschiebbar an dem Rungenkopf gehalten ist.

Das die Handhabung der jeweiligen Runge während der Bewegung zwischen der Gebrauchsstellung und der Beladestellung erleichternde Verschwenken der Runge kann dabei zusätzlich erleichtert werden, dass das Tragstück in einer an dem Rungenkopf ausgebildeten Öffnung geführt ist, deren in Achsrichtung der Drehachse der mindestens einen Rolle der Runge gemessene lichte Weite derart an die Dicke des in der Öffnung sitzenden Abschnitts des Tragstücks angepasst ist, dass das Tragstück bei aus der Gebrauchsstellung gelöster Runge in einer in Achsrichtung der Drehachse der mindestens einen Rolle der Runge gerichteten Richtung kippbar ist.

Als besonders vorteilhaft erweist sich die Erfindung bei Verwendung von Rungen, die nur einseitig gelagert sind, bei denen also kein Rollenpaar vorgesehen ist, über das eine gleichmäßige beidseitige Verteilung der von der Runge auf das Führungsprofil übertragenen Kräfte erzielt werden kann, sondern bei denen nur Rollen vorgesehen sind, die entweder nur auf der dem vom Planenaufbau umgrenzten Laderaum zugeordneten Seite oder nur auf der der freien Umgebung des Planenaufbaus zugeordneten Seite der Runge angeordnet sind. Eine solche einseitige Lagerung hat den großen Vorteil, dass für die Lagerung der Runge an dem Längsträger-Führungsprofil wesentlich weniger Breite benötigt wird als bei einer doppelseitigen, Rollenpaare voraussetzenden Lagerung. Durch die Erfindung ist selbst dann eine weitestgehend verschleißminierte Fixierung der Rungen sichergestellt, wenn die jeweiligen einzelnen Rollen der Runge bezogen auf die Querschnittsmitte der Runge in Achsrichtung der Drehachse der Rolle der Runge versetzt angeordnet sind.

Eine besonders sichere Lagerung und Abstützung der jeweiligen Runge an dem Traggerüst kann dadurch erreicht werden, dass das die Rollen tragende Tragstück als U-förmiger Bügel ausgebildet ist, der mit seinen Schenkeln in jeweils einer Öffnung des Rungenkopfes geführt ist. Die Schenkel dienen dann als Doppelführung, wogegen der Basisabschnitt zwischen den Schenkeln zum Lagern von Rollen an zwei oder mehr in Längsrichtung des Basisabschnitts beabstandeten Drehachsen genutzt werden kann.

Damit das erfindungsgemäß vorgesehene Arretierstück die Längsverschiebung der Runge an dem jeweiligen Führungsprofil nicht behindert, kann es darüber hinaus zweckmäßig sein, dass die Höhe des Arretierstücks kleiner ist als die maximale Länge des Verschiebewegs, über den das Tragstück relativ zur Runge verschoben werden kann.

Das Einführen des Arretierstücks in die jeweilige Öffnung kann dadurch erleichtert werden, dass das Arretierstück an seiner freien, von der Runge abgewandten Kopfseite aufeinander zulaufende Schrägflächen besitzt. Dies erweist sich insbesondere dann als günstig, wenn als Öffnung, in die das Arretierelement greift, der Führungsschlitz des Führungsprofils genutzt wird und das Arretierelement eine längliche Form besitzt. Indem dabei die Längsseiten des Arretierelements zumindest im Bereich des Übergangs zur freien Kopfseite des Arretierelements angeschrägt sind, lässt sich jedes Verhaken oder Verkeilen des Arretierelements in dem Führungsschlitz sicher vermeiden.

Das Arretierstück kann separat vorgefertigt und anschließend an dem Rungenkopf befestigt sein. Hierzu kann das Arretierstück beispielsweise aus einem ausreichend verschleißbeständigen Kunststoff bestehen, der optimalerweise einen geringen Reibwert aufweist. Alternativ ist es aber auch möglich, den Rungenkopf und das Arretierstück einstückig auszubilden. Dazu kann der Rungenkopf mit dem Arretierstück beispielsweise als Gussteil aus Metall oder Kunststoff gefertigt sein.

Als besonders praxisgerecht erweist sich die Erfindung bei solchen aus dem Stand der Technik an sich bekannten Runge, die mindestens zwei Rungenstücke umfassen, die zur Längenverstellung der Runge in Längsrichtung der Runge verschiebbar und in der Gebrauchsstellung aneinander arretierbar sind.

Nachfolgend wird die Erfindung anhand einer ein Ausführungsbeispiel zeigenden Zeichnung näher erläutert. Deren Figuren zeigen jeweils schematisch:
- Fig. 1: ein Nutzfahrzeug in einer perspektivischen Ansicht;

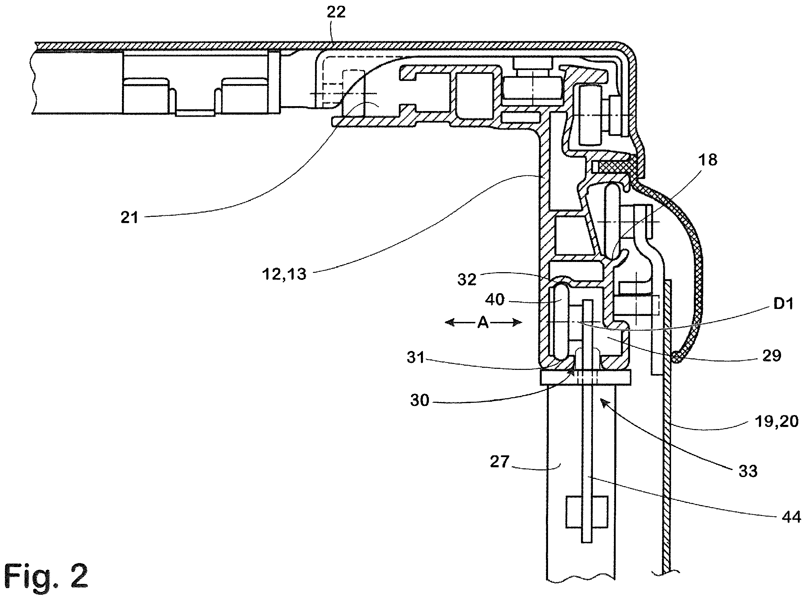

- Fig. 2: ein Längsträger-Führungsprofil in einem Schnitt entlang der Schnittlinie X-X in Fig. 1 mit einer in Gebrauchsstellung arretierter Runge;

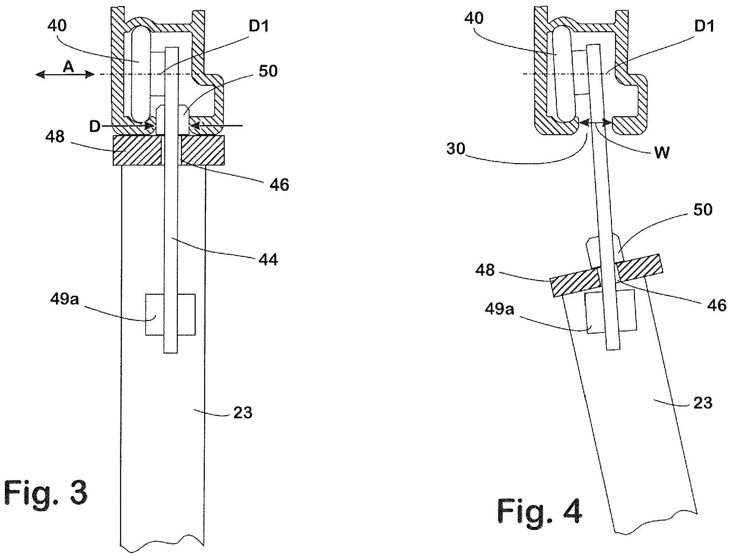

- Fig. 3: einen vergrößerten Ausschnitt des in Fig. 2 gezeigten Schnitts;
- Fig. 4: den Ausschnitt gemäß Fig. 3 aus der arretierten Stellung gelöster, für das Verschieben in die Beladestellung vorbereiteter Runge;

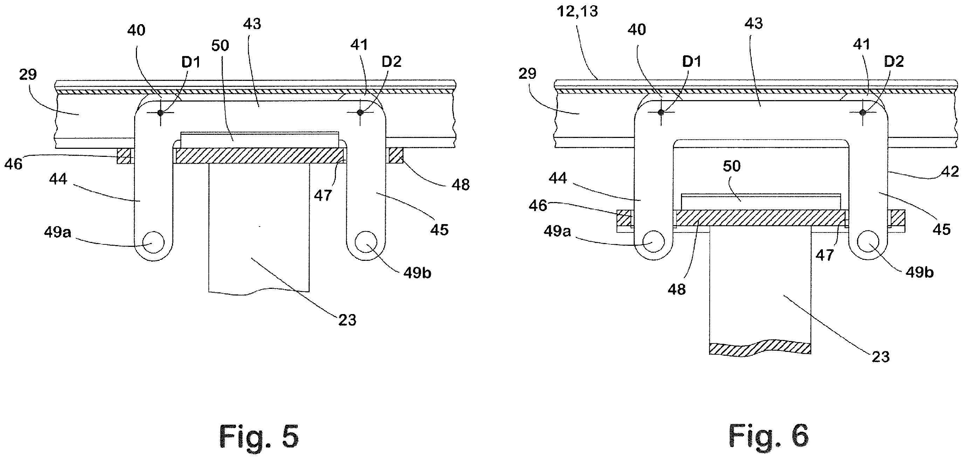

- Fig. 5: einen Ausschnitt des Längsträger-Führungsprofils in einer längsgeschnittenen Ansicht bei in Gebrauchsstellung arretierter Runge;
- Fig. 6: den Ausschnitt gemäß Fig. 5 bei aus der arretierten Stellung gelöster, für das Verschieben in die Beladestellung vorbereiteter Runge;

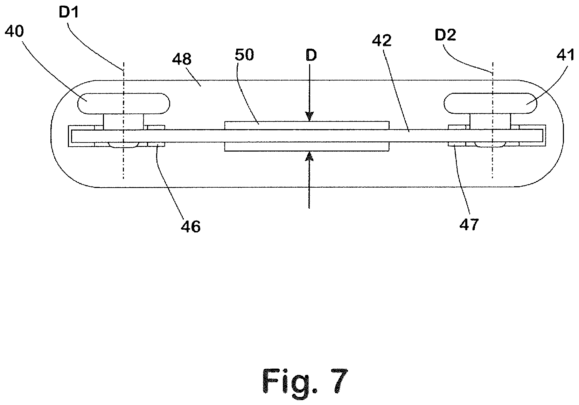

- Fig. 7: die Runge in einer Ansicht von oben.

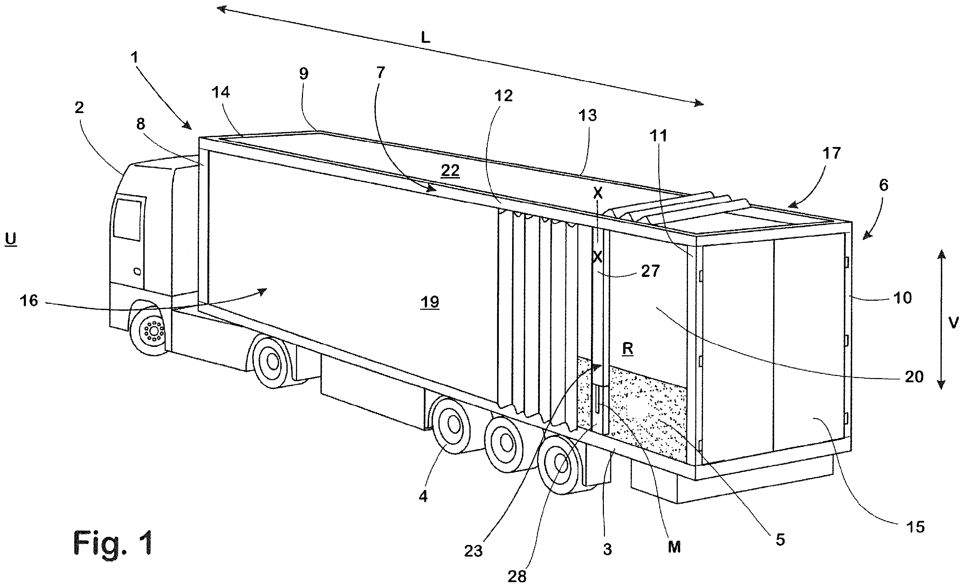

Bei dem in Fig. 1 dargestellten Nutzfahrzeug 1 handelt es sich um einen Sattelauflieger, der von einer Zugmaschine 2 gezogen wird. Das nach Art konventioneller Sattelauflieger aufgebaute Nutzfahrzeug 1 umfasst ein Chassis 3, an dem die Laufräder 4 des Nutzfahrzeugs 1 gelagert sind und mit dem das Nutzfahrzeug 1 auf dem Sattel der Zugmaschine 2 aufliegt. Das Chassis 3 trägt zudem einen Boden 5, über dem ein Planenaufbau 6 errichtet ist, der einen Laderaum R umgrenzt.

Der grundsätzliche Aufbau von Nutzfahrzeugen mit Planenaufbauten ist in der Broschüre S.CS / S.PR Planenfahrzeuge (Druckvermerk: S.CS-BRO-DE1-6473-3414) beschrieben, die unter der URL: http://www.cargobull.com/de/Download-Center 216 358.html zum Download bereitsteht.

Der Planenaufbau 6 umfasst ein Traggerüst 7. Dessen Grundstruktur ist durch vier Eckrungen 8,9,10,11, zwei von den Eckrungen 8-11 getragenen Längsträgern 12,13, einer Stirnwand 14 und einer Rückwand 15 gebildet. Die eine Eckrunge 8 steht in der Ecke, in der die eine Längsseite 16 des Nutzfahrzeugs 1 mit der der Zugmaschine 2 zugeordneten Stirnwand 14 zusammentrifft, eine zweite Eckrunge 9 in der Ecke, in der die andere Längsseite 17 des Nutzfahrzeugs 1 mit der Stirnwand 14 zusammentrifft, eine dritte Eckrunge 10 in der Ecke, in der die Längsseite 17 mit der Rückseite 15 des Nutzfahrzeugs 1 zusammentrifft, und eine vierte Runge 11 in der Ecke auf dem Chassis 3, in der die eine Längsseite 16 des Nutzfahrzeugs 1 mit der Rückseite 15 zusammentrifft. Dabei tragen die der einen Längsseite 16 zugeordneten Eckrungen 8,11 den Längsträger 12 und die der Längsseite 17 zugeordneten Eckrungen 9,10 den Längsträger 13.

Die Längsträger 12,13 sind jeweils als Führungsprofile ausgebildet. Dementsprechend sind in den Längsträgern 12,13 jeweils über die Länge L des Nutzfahrzeugs 1 sich erstreckende Längsführungen 18 für eine der jeweiligen Längsseite 16,17 zugeordnete Seitenplane 19,20 und eine Längsführung 21 für eine das Dach des Planenaufbaus 6 bildende Dachplane 22 ausgebildet. Entlang der jeweils zugeordneten Längsführungen 18,21 des jeweiligen Längsträgers 12,13 können die Seitenplanen 19,20 und die Dachplane 22 aus einer geschlossenen Stellung, in der sie die jeweilige Längsseite 16,17 bzw. das Dach des Planenaufbaus 6 verschließen, in Richtung der Stirnwand 14 geschoben werden, um an der jeweiligen Längsseite 16,17 bzw. am Dach eine Öffnung freizugeben, über die der vom Planenaufbau 6 umgrenzte Laderaum R beladen werden kann.

Das Traggerüst 7 umfasst des Weiteren pro Längsseite 16,17 beispielsweise vier Rungen 23, die in ihrer Gebrauchsstellung in gleichmäßigen Abständen zwischen den der jeweiligen Längsseite 16,17 zugeordneten Eckrungen 8,10;9,11 angeordnet sind und sich dabei zwischen dem jeweiligen Längsträger 12,13 und einem der jeweiligen Längsseite 16,17 zugeordneten Seitenprofil des Chassis 3 erstrecken, um die Längsträger 12,13 gegen das Chassis 3 abzustützen. Die Rungen 23 sind ihrem Grundkonzept nach ebenfalls konventionell aufgebaut. Sie weisen jeweils ein Schubstück 27 und ein Stützstück 28 auf. Das Schubstück 27 und das Stützstück 28 sind in an sich bekannter Weise nach Art einer Teleskopstange in vertikaler Richtung V ineinander schiebbar bzw. auseinander ziehbar, um die Höhe der Rungen 23 an die Höhe des Planenaufbaus 6 anpassen und die Rungen 23 in ihrer jeweiligen Gebrauchsstellung fixieren zu können. Dabei trägt das Stützstück 28 in ebenso bekannter Weise einen ebenfalls bekannten Arretiermechanismus M, mit dem einerseits die Relativstellung des Schubstücks 27 und des Stützstücks 28 und andererseits die jeweilige Runge 23 in ihrer Gebrauchsstellung fixiert werden. Zum Lösen der Rungen 23 aus der Gebrauchsstellung wird der Arretiermechanismus M entriegelt, so dass das Stützstück 28 vom Chassis 3 gelöst und in oder auf das Schubstück 27 geschoben werden kann, um die jeweilige Runge 23 in ihre Beladungsstellung zu bewegen.

Die Rungen 23 sind dabei ebenfalls verschiebbar an dem jeweils zugeordneten Längsträger 12,13 gelagert. Zu diesem Zweck ist an den Längsträgern 12,13 auch für die Rungen 23 eine Längsführung 29 ausgebildet. Diese sich über die Länge des jeweiligen Längsträgers 12,13 erstreckende Längsführung 29 ist kanalförmig ausgebildet und durch einen in ihre dem Chassis 3 zugeordneten Unterseite eingeformten Führungsschlitz 30 geöffnet. Auf der dem Laderaum R zugeordneten Seite der Längsführung 29 sind gegenüberliegend zueinander in die Ober- und Unterseite der Längsführung 29 Führungsbahnen 31,32 eingeformt.

In den Führungsbahnen 31,32 sind Rollen 40,41 geführt. Jeder Runge 23 sind zwei solcher Rollen 40,41 zugeordnet. Die Rollen 40,41 sind dabei an einem U-förmigen Tragstück 42 gelagert. Dazu sind auf der dem Laderaum R zugeordneten Seite des Basisabschnitts 43 des Tragstücks 42 zwei in Längsrichtung des Basisabschnitts 43 mit Abstand zueinander angeordnete Drehachsen D1,D2 vorgesehen, die quer zur Längserstreckung (Vertikalrichtung V) der Runge 23 und zur Längsführung 29 ausgerichtet sind. Auf den Drehachsen D1,D2 sind die Rollen 40,41 drehbar gelagert.

Mit seinen Schenkeln 44,45 greift das Tragstück 42 mit weitem Spiel durch jeweils eine Durchgangsöffnung 46,47. Diese Durchgangsöffnungen 46,47 sind in eine Kopfplatte 48 eingeformt, die an der dem jeweiligen Längsträger 12,13 zugeordneten Stirnseite im Kopfbereich 33 der jeweiligen Runge 23 befestigt ist. Auf diese Weise können das Tragstück 42 und die jeweilige Runge 23 in vertikaler Richtung V relativ zueinander verschoben werden. Der Verschiebeweg ist dabei durch jeweils einen Anschlag 49a,49b begrenzt, der an dem durch die Öffnungen 46,47 der Schenkel 44,45 vorhanden ist.

In dem zwischen ihren Öffnungen 46,47 vorhandenen Bereich sitzt auf der Kopfplatte 48 ein Arretierstück 50, das beispielsweise aus einem verschleißbeständigen Kunststoffmaterial mit einem geringem Reibwert besteht. Das Arretierstück 50 hat die Grundform eines Quaders. Jedoch sind die Übergänge zwischen den Längsseitenflächen und der Kopffläche an der Kopfseite des Arretierstücks 50 nach Art einer Phase angeschrägt.

Die in Achsrichtung A der Drehachsen D1,D2 gemessene Dicke D des Arretierstücks 50 ist im Rahmen eines technisch unvermeidbaren Toleranzbereichs gleich der lichten Weite W des Führungsschlitzes 30. Auf diese Weise sitzt das Arretierstück 50 bei in Gebrauchsstellung arretierter Runge 23 bezogen auf die Achsrichtung der Drehachsen D1,D2 formschlüssig zwischen den den Führungsschlitz 30 an seinen Längsseiten begrenzenden Seitenflächen.

In ihrer Gebrauchsstellung sind die Rungen 23 so zwischen dem Chassis 3 und dem jeweiligen Längsträger 12,13 verspannt, dass die Rungen 23 mit ihrer Kopfplatte 48 gegen die Unterseite des Längsträgers 12,13 drücken und das Arretierstück 50 in der voranstehend beschriebenen Weise in dem Führungsschlitz 30 sitzt. Auf diese Weise sind durch das Arretierstück 50 Bewegungen der Runge 23 in der in der Längsführung 29 in einer in Achsrichtung A der Drehachsen D1,D2 gerichteten Richtung wirkungsvoll unterdrückt. Dementsprechend sind auch die Relativbewegungen in Achsrichtung A zwischen den Rollen 40,41 und den Führungsbahnen 31,32 und damit abrasiver Verschleiß im Kontaktbereich zwischen den Rollen 40,41 und den Führungsbahnen 31,32 durch das Arretierstück 50 minimiert.

Um die Rungen 23 zu lösen und in die Beladestellung zu verschieben, wird der Arretiermechanismus M gelöst. Dann wird das Stützstück 28 so weit auf oder in das Schubstück 27 geschoben, bis die Runge 23 vom Chassis 3 abgehoben und in Richtung der freien Umgebung U des Nutzfahrzeugs 1 geschwenkt werden kann. Als Lager für diese Schwenkbewegung dienen dabei einerseits die Rollen 40,41 und andererseits die Öffnungen 46,47 mit den sie durchgreifenden Schenkeln 44,45 des Tragstücks 42. Gleichzeitig wird die Runge 23 in ihrer Längsrichtung nach unten gezogen, so dass das Arretierstück 50 aus dem Führungsschlitz 30 gezogen wird und die Kopfplatte 48 entlang der Schenkel 44,45 des Tragstücks 42 gleitet, bis sie mit ihrer Unterseite auf den Anschlägen 49a,49b sitzt. Nun kann die jeweilige Runge 23 entlang der Längsführung 29 in die Beladestellung geschoben werden. Die Rollen 40,41 rollen dabei auf der unteren Führungsbahn 31 oder der oberen Führungsbahn 32 ab. Das Spiel zwischen den Führungsbahnen 31,32 und den Rollen 40,41 sowie der Abstand zwischen den Führungsbahnen 31,32 sind dabei so aufeinander abgestimmt, dass die Rollen 40,41 abhängig von der Schwenkstellung der Runge 23 jeweils entweder an der oberen Führungsbahn 32 oder an der unteren Führungsbahn 31 geführt sind, jedoch allenfalls in Ausnahmefällen sowohl die obere als auch die untere Führungsbahn 31,32 berühren.

Nachdem die Rungen 23 wieder in ihre Gebrauchsstellung zurückgeschoben worden sind, wird das Schubstück 27 angehoben, bis die Kopfplatte 48 der jeweiligen Runge 23 gegen die Unterseite des zugeordneten Längsträgers 12,13 stößt. Das Arretierstück 50 findet dabei aufgrund seiner kopfseitig angeschrägten Form selbsttätig den Führungsschlitz 30, so dass die Runge 23, sobald die Kopfplatte 48 an dem Längsträger 12,13 anliegt, bereits in Bezug auf die Achsrichtung A der Drehachsen D1,D2 optimal ausgerichtet ist. Anschließend wird das Stützstück 28 abgesenkt, bis es auf dem zugeordneten Träger des Chassis 3 sitzt. Dann wird die Runge 23 mittels des Arretiermechanismus M in der Gebrauchsstellung fixiert.

### BEZUGSZEICHEN

- 1: Nutzfahrzeug (Sattelauflieger)
- 2: Zugmaschine
- 3: Chassis
- 4: Laufräder des Nutzfahrzeugs 1
- 5: Boden
- 6: Planenaufbau
- 7: Traggerüst
- 8-11: Eckrungen
- 12,13: Längsträger (Führungsprofil)
- 14: Stirnwand
- 15: Rückwand
- 16,17: Längsseiten
- 18: Längsführung
- 19,20: Seitenplanen
- 21: Längsführung
- 22: Dachplane
- 23: Rungen
- 27: Schubstück
- 28: Stützstück
- 29: Längsführung
- 30: Führungsschlitz
- 31,32: Führungsbahnen
- 33: Kopfbereich der Rungen 23
- 40,41: Rollen
- 42: Tragstück
- 43: Basisabschnitt
- 44,45: Schenkel
- 46,47: Durchgangsöffnungen
- 48: Kopfplatte
- 49a,49b: Anschläge
- 50: Arretierstück

- A: Achsrichtung der Drehachsen D1,D2
- D: Dicke des Arretierstücks 50
- D1,D2: Drehachsen
- L: Länge des Nutzfahrzeugs
- M: Arretiermechanismus
- R: Laderaum
- U: Umgebung
- V: Vertikalrichtung
- W: lichte Weite des Führungsschlitzes 30

## Patentansprüche

1. Traggerüst für einen Planenaufbau (6) eines Nutzfahrzeugs (1), wobei das Traggerüst (7) ein Führungsprofil (12,13) und eine Runge (23) umfasst, die einen Rungenkopf (33) mit mindestens einer daran gelagerten Rolle (40,41) besitzt, deren Drehachse (D1,D2) quer zur Längsachse (V) der Runge (23) ausgerichtet ist und die an dem Führungsprofil (12,13) rollbar geführt ist, um ein Verschieben der Runge (23) längs des Führungsprofils (12,13) aus einer Gebrauchsstellung, in der die Runge (23) arretierbar und aus der die Runge (23) lösbar ist, in eine Beladestellung zu ermöglichen, in der eine seitliche Öffnung des Planenaufbaus (6) zum Beladen des Nutzfahrzeugs (1) freigegeben ist, **dadurch gekennzeichnet, dass** die Runge (23) im Bereich ihres Rungenkopfes (33) ein Arretierstück (50) trägt, das bei in Gebrauchsstellung arretierter Runge (23) in eine an dem Führungsprofil (12,13) vorgesehene Öffnung (30) greift und dessen in Achsrichtung (A) der Drehachse der Rolle (40,41) gemessene Dicke (D) derart an die ebenfalls in Achsrichtung (A) der Drehachse (D1,D2) der Rolle (40,41) gemessene lichte Weite (W) der Öffnung (30) des Führungsprofils (12,13) angepasst ist, dass das Arretierstück (50), wenn die Runge (23) in ihrer Gebrauchsstellung arretiert ist, bezogen auf die Achsrichtung (A) der Drehachse (D1,D2) der Rolle (40,41) formschlüssig in der Öffnung (30) des Führungsprofils (12,13) sitzt.

2. Traggerüst nach Anspruch 1, **dadurch gekennzeichnet, dass** die Öffnung des Führungsprofils (12,13), in der das Arretierstück (50) bei in Gebrauchsstellung arretierter Runge (23) sitzt, durch einen Führungsschlitz (30) gebildet ist, in dem die mindestens eine Rolle (40,41) der Runge (23) geführt ist.

3. Traggerüst nach Anspruch 2, **dadurch gekennzeichnet, dass** die Rolle (40,41) an einem Tragstück (42) gelagert ist, welches in Längsrichtung (V) der Runge (23) über einen bestimmten Verschiebeweg verschiebbar an dem Rungenkopf (33) gehalten ist.

4. Traggerüst nach Anspruch 3, **dadurch gekennzeichnet, dass** das Tragstück (42) in einer an dem Rungenkopf (33) ausgebildeten Öffnung (46,47) geführt ist, deren in Achsrichtung (A) der Drehachse (D1,D2) der mindestens einen Rolle (40,41) der Runge (23) gemessene lichte Weite (W) derart an die Dicke des in der Öffnung (46,47) sitzenden Abschnitts (44,45) des Tragstücks (42) angepasst ist, dass das Tragstück (42) bei aus der Gebrauchsstellung gelöster Runge (23) in einer in Achsrichtung (A) der Drehachse (D1,D2) der mindestens einen Rolle (40,41) der Runge (23) gerichteten Richtung kippbar ist.

5. Traggerüst nach einem der voranstehenden Ansprüche, **dadurch gekennzeichnet, dass** die Rolle (40,41) der Runge (23) bezogen auf die Querschnittsmitte der Runge (23) in Achsrichtung (A) der Drehachse (D1,D2) der Rolle (40,41) der Runge (23) versetzt angeordnet ist.

6. Traggerüst nach einem der Ansprüche 3 - 5, **dadurch gekennzeichnet, dass** das Tragstück (42) als U-förmiger Bügel ausgebildet ist, der mit seinen Schenkeln (44,45) in jeweils einer Öffnung (46,47) des Rungenkopfes (33) geführt ist.

7. Traggerüst nach einem der Ansprüche 3 - 6, **dadurch gekennzeichnet, dass** die Höhe des Arretierstücks (50) kleiner ist als die maximale Länge des Verschiebewegs.

8. Traggerüst nach einem der voranstehenden Ansprüche, **dadurch gekennzeichnet, dass** das Arretierstück (50) an seiner freien, von der Runge (23) abgewandten Kopfseite aufeinander zulaufende Schrägflächen besitzt.

9. Traggerüst nach einem der voranstehenden Ansprüche, **dadurch gekennzeichnet, dass** die Runge (23) mindestens zwei Rungenstücke umfasst, die zur Längenverstellung der Runge (23) in Längsrichtung der Runge (23) verschiebbar und in der Gebrauchsstellung arretierbar sind.

## Claims

1. Support frame for a tarpaulin structure (6) of a utility vehicle (1), wherein the support frame (7) comprises a guiding profile (12, 13) and a stanchion (23) which has a stanchion head (33) having at least one roller (40, 41) which is supported thereon and whose rotation axis (D1, D2) is orientated transversely relative to the longitudinal axis (V) of the stanchion (23) and which is guided so as to be able to be rolled on the guiding profile (12, 13) in order to enable a displacement of the stanchion (23) along the guiding profile (12, 13) from a position for use, in which the stanchion (23) can be locked and from which the stanchion (23) can be released, into a loading position, in which a lateral opening of the tarpaulin structure (6) is released for loading the utility vehicle (1), **characterised in that** the stanchion (23) in the region of the stanchion head (33) thereof carries a locking piece (50) which when the stanchion (23) is locked in the position for use engages in an opening (30) provided in the guiding profile (12, 13) and whose thickness (D) measured in the axial direction (A) of the rotation axis of the roller (40, 41) is adapted in such a manner to the clear width (W) of the opening (30) of the guiding profile (12, 13), which clear width is also measured in the axial direction (A) of the rotation axis (D1, D2) of the roller (40, 41), that the locking piece (50), when the stanchion (23) is locked in its position for use, with respect to the axial direction (A) of the rotation axis (D1, D2) of the roller (40, 41), rests in a positive-locking manner in the opening (30) of the guiding profile (12, 13).

2. Support frame according to claim 1, **characterised in that** the opening of the guiding profile (12, 13) in which the locking piece (50) rests when the stanchion (23) is locked in the position for use, is formed by a guiding slot (30) in which the at least one roller (40, 41) of the stanchion (23) is guided.

3. Support frame according to claim 2, **characterised in that** the roller (40, 41) is supported on a carrier piece (42), which is retained on the stanchion head (33) so as to be able to be displaced in the longitudinal direction (V) of the stanchion (23) over a specific displacement path.

4. Support frame according to claim 3, **characterised in that** the support piece (42) is guided in an opening (46, 47) which is formed on the stanchion head (33) and whose clear width (W) measured in the axial direction (A) of the rotation axis (D1, D2) of the at least one roller (40, 41) of the stanchion (23) is adapted to the thickness of the portion (44, 45) of the support piece (42) which rests in the opening (46, 47) in such a manner that the support piece (42), when the stanchion (23) is released from the position for use, can be tilted in a direction orientated in an axial direction (A) of the rotation axis (D1, D2) of the at least one roller (40, 41) of the stanchion (23).

5. Support frame according to any one of the preceding claims, **characterised in that** the roller (40, 41) of the stanchion (23) is arranged offset with respect to the cross-sectional centre of the stanchion (23) in an axial direction (A) of the rotation axis (D1, D2) of the roller (40, 41) of the stanchion (23).

6. Support frame according to any one of claims 3 to 5, **characterised in that** the support piece (42) is constructed as a U-shaped curved yoke which is guided with the legs (44, 45) thereof in an opening (46, 47) of the stanchion head (33), respectively.

7. Support frame according to any one of claims 3 to 6, **characterised in that** the height of the locking piece (50) is smaller than the maximum length of the displacement path.

8. Carrier frame according to any one of the preceding claims, **characterised in that** the locking piece (50) has at the free head side thereof facing away from the stanchion (23) inclined faces which taper towards each other.

9. Support frame according to any one of the preceding claims, **characterised in that** the stanchion (23) comprises at least two stanchion pieces which for longitudinal adjustment of the stanchion (23) can be displaced in the longitudinal direction of the stanchion (23) and which can be locked in the position for use.

## Revendications

1. Bâti porteur pour une superstructure (6) d'un véhicule utilitaire (1), le bâti porteur (7) comportant un profil de guidage (12, 13) et un rancher (23), lequel possède une tête de rancher (33) avec au moins un galet (40, 41) y étant logé dessus, dont l'axe de rotation (D1, D2) est orienté transversalement par rapport à l'axe longitudinal (V) du rancher (23) et est guidé mobile sur le profil de guidage (12, 13) afin de rendre possible un déplacement du rancher (23) le long du profil de guidage (12, 13) depuis une position d'utilisation, dans laquelle le rancher (23) est susceptible de pouvoir être bloqué et à partir de laquelle le rancher (23) est susceptible de pouvoir être débloqué, vers une position de chargement, dans laquelle une ouverture latérale de la superstructure (6) est dégagée pour le chargement du véhicule utilitaire (1), **caractérisé en ce que** le rancher (23) dans la zone de sa tête de rancher (33) porte une pièce d'arrêt (50) qui s'engrène, lorsque le rancher (23) est bloqué dans la position d'utilisation, dans une ouverture (30) prévue sur le profil de guidage (12, 13) et dont l'épaisseur (D) mesurée dans la direction axiale (A) de l'axe de rotation du galet (40, 41) est adaptée à la largeur (W) interne de l'ouverture (30) du profil de guidage (12,13) mesurée également dans la direction axiale (A) de l'axe de rotation (D1, D2) du galet (40, 41) de sorte que la pièce d'arrêt (50), lorsque le rancher (23) est bloqué dans sa position d'utilisation par rapport à la direction axiale (A) de l'axe de rotation (D1, D2) du galet (40, 41), loge, par liaison de forme, dans l'ouverture (30) du profil de guidage (12, 13).

2. Bâti porteur selon la revendication 2, **caractérisé en ce que** l'ouverture du profil de guidage (12, 13), dans laquelle est logée la pièce d'arrêt (50) lorsque le rancher (23) est bloqué dans la position d'utilisation, est formée par une fente de guidage (30), dans laquelle est guidé au moins un galet (40, 41) du rancher (23).

3. Bâti porteur selon la revendication 2, **caractérisé en ce que** le galet (40, 41) est logé sur une pièce de support (42), laquelle est maintenue, en direction longitudinale (V) du rancher (23), déplaçable sur la tête de rancher (33) sur un trajet de coulissement déterminé.

4. Bâti porteur selon la revendication 3, **caractérisé en ce que** la pièce de support (42) est guidée dans une ouverture (46, 47) conçue sur la tête de rancher (33), dont la largeur (W) interne mesurée en direction axiale (A) de l'axe de rotation (D1, D2) d'au moins un galet (40, 41) du rancher (23) est adaptée de telle sorte à l'épaisseur de la section (44, 45) de la pièce de support (42) logée dans l'ouverture (46, 47) que la pièce de support (42) est susceptible de pouvoir basculer, lorsque le rancher (23) est débloqué depuis la position d'utilisation, dans une direction orientée dans la direction axiale (A) de l'axe de rotation (D1, D2) d'au moins un galet (40, 41) du rancher (23).

5. Bâti porteur selon l'une des revendications précédentes, **caractérisé en ce que** le galet (40, 41) du rancher (23) est agencé décalé par rapport au centre en section transversale du rancher (23) dans la direction axiale (A) de l'axe de rotation (D1, D2) du galet (40, 41) du rancher (23).

6. Bâti porteur selon l'une des revendications 3 à 5, **caractérisé en ce que** la pièce de support (42) est conçue en tant qu'étrier en forme de U qui est guidé avec ses branches (44, 45) dans respectivement une ouverture (46, 47) de la tête de rancher (33).

7. Bâti porteur selon l'une des revendications 3 à 6, **caractérisé en ce que** la hauteur de la pièce d'arrêt (50) est inférieure à la longueur maximale du trajet de coulissement.

8. Bâti porteur selon l'une des revendications précédentes, **caractérisé en ce que** la pièce d'arrêt (50) possède, sur son côté tête libre opposé au rancher (23), des surfaces inclinées convergentes.

9. Bâti porteur selon l'une des revendications précédentes, **caractérisé en ce que** le rancher (23) comporte au moins deux pièces de rancher qui sont susceptibles d'être déplacées pour le réglage de la longueur du rancher (23) en direction longitudinale du rancher (23) et d'être bloquées dans la position d'utilisation.
